Europäisches Patentamt

European Patent Office

Office européen des brevets

(11) Veröffentlichungsnummer: **0 434 972 A2**

# (12) EUROPÄISCHE PATENTANMELDUNG

(21) Anmeldenummer: 90122142.4

(22) Anmeldetag: 20.11.90

(51) Int. Cl.5: **H04J 3/16**, H04L 12/48, H04Q 11/04, H04L 5/22

(30) Priorität: 21.12.89 DE 3942275

(43) Veröffentlichungstag der Anmeldung:
03.07.91 Patentblatt 91/27

(84) Benannte Vertragsstaaten:
AT BE CH ES FR IT LI NL

(71) Anmelder: **TELENORMA GMBH**
**Mainzer Landstrasse 128-146**
**W-6000 Frankfurt/Main(DE)**

(72) Erfinder: **Krautkrämer, Wilfried, Dipl-Ing.**
**Waldschulstrasse 115**
**W-6000 Frankfurt/M. 80(DE)**
Erfinder: **Artun, Berkan, Dipl-Ing.**
**Landwehrstrasse 6**
**W-6100 Darmstadt(DE)**
Erfinder: **Schlichthärle, Dietrich, Dr.**
**Hermann-Löns-Strasse 7**
**W-6457 Maintal 1(DE)**
Erfinder: **Keles, Burhan, Dipl.-Ing.**
**Mollerstrasse 30**
**W-6100 Darmstadt(DE)**

(54) Verfahren zur Übertragungstechnischen Integration von ISDN-Kanälen mit einem breitbandigen asynchronen Zeitmultiplex-Kanal für digital betriebene Kommunikations-Vermittlungsanlagen.

(57)
1. Verfahren zur übertragungstechnischen Integration von ISDN-Kanälen mit einem breitbandigen asynchronen Zeitmultiplex-Kanal für digital betriebene Kommunikations-Vermittlungsanlagen.

2.1 Es soll erreicht werden, daß bei der Einführung von Breitband-Kommunikationsnetzen existierende Vermittlungsanlagen und Endgeräte des Dienste integrierenden Digitalnetzes ISDN unverändert beibehalten werden können und mit auf asynchroner Basis arbeitenden Breitband-Kommunikations-Vermittlungsanlagen zusammen arbeiten.

2.2 Jeweils ein Anschlußorgan einer im asynchronen Zeitmultiplex arbeitenden ATM-Vermittlungsanlage ist mit einem zugeordneten Anschlußorgane an einer ISDN-Vermittlungsanlage verbunden. Dort werden ISDN-Schmalbanddaten den Breitbanddaten hinzugefügt und/oder von diesen getrennt, indem mit Verletzungen der Coderegel gearbeitet wird. Beide Arten von Daten werden gemeinsam über eine Teilnehmeranschlußleitung zu einer Netzabschlußeinrichtung übertragen woran Endgeräte verschiedener Kategorie angeschlossen sein können.

2.3 Sowohl Breitbandvermittlungsanlagen nach dem asynchronen Zeitmultiplexverfahren als auch bestehende ISDN-Vermittlungsanlagen können zusammenarbeiten, ohne daß Vorleistungen größeren Umfangs erforderlich sind. Bei der Einführung von Breitband-Kommunikationsnetzen können bestehende Netzstrukturen des Dienste integrierenden Digitalnetzes beibehalten werden, wobei auch vorhandene Endgeräte benutzbar sind, welche mit Endgeräten des Breitband-Kommunikationsnetzes ohne weiteres kommunizieren können.

EP 0 434 972 A2

Fig. 1

# VERFAHREN ZUR ÜBERTRAGUNGSTECHNISCHEN INTEGRATION VON ISDN-KANÄLEN MIT EINEM BREITBANDIGEN ASYNCHRONEN ZEITMULTIPLEX-KANAL FÜR DIGITAL BETRIEBENE KOMMUNIKATIONS-VERMITTLUNGSANLAGEN

Die Erfindung betrifft ein Verfahren nach dem Oberbegriff des Patentanspruchs 1.

Für die Zukunft ist die Einführung eines Breitband-Kommunikationsnetzes geplant, wobei das asynchrone Zeitmultiplexverfahren angewendet werden soll. Inzwischen wird das Dienste integrierende digitale Netz (ISDN), das sich gerade in der Einführungsphase befindet weiterentwickelt und verbreitet sein, wobei vorwiegend eine Datenübertragung mit begrenzter Bandbreite für Fernsprechen, Fernkopieren, Textübertragung usw. zur Verfügung stehen wird.

Über eine Breitbanderweiterung des Dienste integrierenden digital Netzes ISDN wird auch nachgedacht, wie dies beispielsweise in den TN-Nachrichten von 1986, Heft 88 beschrieben wird. In dem auf Seite 5 beginnenden Aufsatz mit dem Titel: "Der Weg zum digitalen Universalnetz" ist in einer grafischen Darstellung (Bild 2) aufgezeigt, auf welchem Weg ein Dienste integrierendes Universalnetz erreicht werden soll, welches auch Breitbanddienste einschließt. Für die Akzeptanz von neuen Breitbanddiensten, insbesondere auf der Basis des asynchronen Zeitmultiplex, wird es von entscheidender Bedeutung sein, wie sich bestehende Vermittlungseinrichtungen und Endgeräte des ISDN mit einem neuen Breitband-Universalnetz verbinden lassen.

Es ist bereits bekannt, in einem digitalen Breitbandkanal schmalbandige Daten zu übertragen, indem diese Schmalbanddaten in Form von Coderegelverletzungen den Breitbanddaten zugefügt werden. Verfahren und Anordnungen für derartige Nachrichtenübertragungssysteme sind aus den deutschen Offenlegungsschriften 37 21 805 A1 und 37 23 187 A1 bekannt. In beiden Fällen wird die sog. CMI-Codierung (Coded Mark Inversion) zugrundegelegt, womit eine nahezu gleichstromfreie Datenübertragung erreicht wird. Beim Hinzufügen von Schmalbanddaten wird jeweils bei deren Auftreten eine Verletzung der Codierregel bewußt durch besondere Schaltungsanordnungen herbeigeführt. An der empfangenden Stelle werden diese Coderegelverletzungen erkannt und daraufhin die Schmalbanddaten ausgekoppelt, so daß sie separat von den Breitbanddaten weitergegeben werden können.

Die Aufgabe der Erfindung besteht darin, ein Verfahren anzugeben, mit dem ermöglicht wird, daß bestehende Vermittlungseinrichtungen und Endgeräte des Dienste integrierenden digitalen Netzes ISDN auch dann beibehalten werden können, wenn ein auf asynchronem Zeitmultiplex basierendes Breitband-Universalnetz eingeführt wird. Das Verfahren soll dabei so ausgebildet sein, daß bei bestehenden Anlagen keine Vorleistungen oder Nachrüstungen erforderlich sind, wenn sie mit neuen Breitbandvermittlungs- oder Übertragungssystemen zusammen arbeiten sollen.

Die Lösung dieser Aufgabe erfolgt durch eine Merkmalskombination, wie sie im Patentanspruch 1 angegeben ist.

Damit wird in vorteilhafter Weise erreicht, daß bestehende Endgeräte und Vermittlungseinrichtungen weiter verwendet werden können, wenn Breitbandvermittlungen nach dem Prinzip des asynchronen Zeitmultiplex in Zukunft eingesetzt werden. Dabei können Vermittlungsstrukturen und Bedienungsprozeduren unverändert beibehalten werden.

Die in den Unteransprüchen angegebenen Weiterbildungen der Erfindung geben für spezielle Einsatzfälle vorteilhafte Ausgestaltungen der Anordnungen an.

Ein Ausführungsbeispiel der Erfindung wird nachfolgend anhand von Zeichnungen näher beschrieben.

Es zeigt

Fig. 1   das Prinzip der Zusammenschaltung von Vermittlungsanlagen und Endgeräten.

Fig. 2   Das Blockschaltbild einer Netzabschlußeinrichtung.

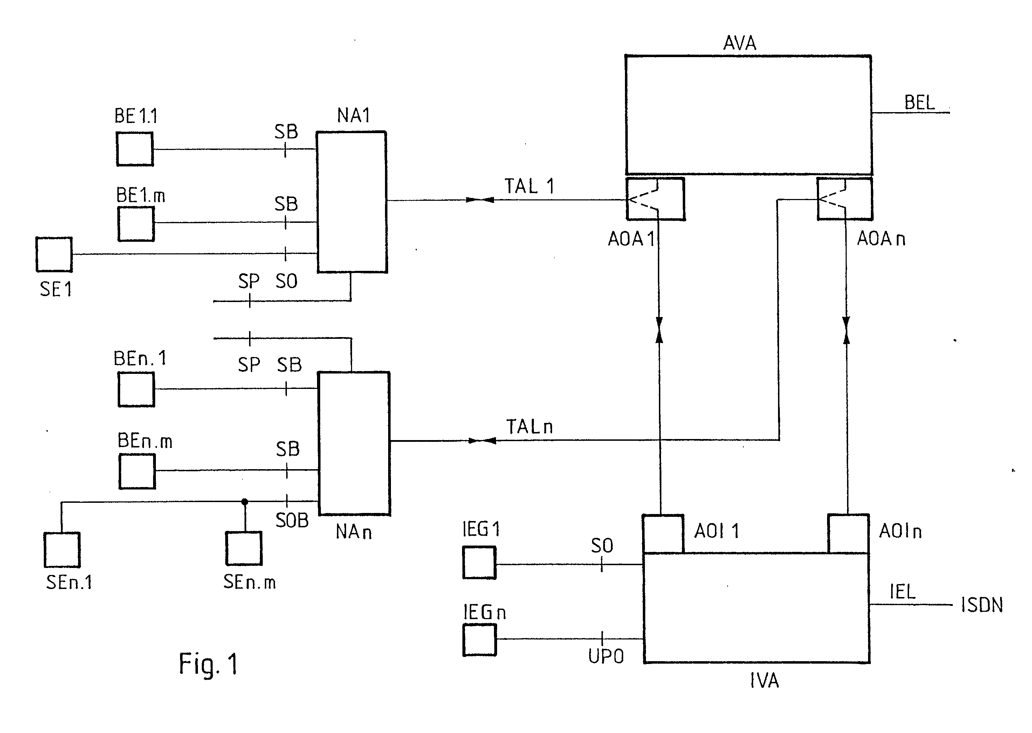

In der Fig. 1 ist eine nach dem asynchronen Zeitmultiplex-Prinzip arbeitende Vermittlungsanlage AVA dargestellt, welche einen Netzzugang zum öffentlichen Breitbandnetz über Breitband-Externleitungen BEL hat. Diese asynchrone Breitband-Vermittlungsanlage AVA verfügt über Anschlußorgane AOA1 - AOAn, woran Teilnehmeranschlußleitungen TAL1 - TALn angeschlossen sind, worüber Daten zu daran angeschlossenen Endgeräten BE, bzw. SE gesendet werden oder von dort empfangen werden. Die Anschlußorgane AOA1 - AOAn enthalten zusätzliche Ein-Ausgangsschnittstellen, woran Anschlußorgane AOI1 - AOIn einer digitalen Vermittlungsanlage IVA angeschlossen sind. Diese digitale Vermittlungsanlage IVA ist über Externleitungen IEL mit dem öffentlichen Dienste integrierenden Digitalnetz ISDN verbunden. An dieser digitalen Vermittlungsanlage IVA, welche Bestandteil des Dienste integrierenden Digitalnetzes ISDN ist, sind über genormte Schnittstellen SO, bzw. U-PO digitale Endgeräte IEG1 - IEGn angeschlossen, welche nach für das Dienste intergrierendeDigitalnetz genormten Protokollen arbeiten.

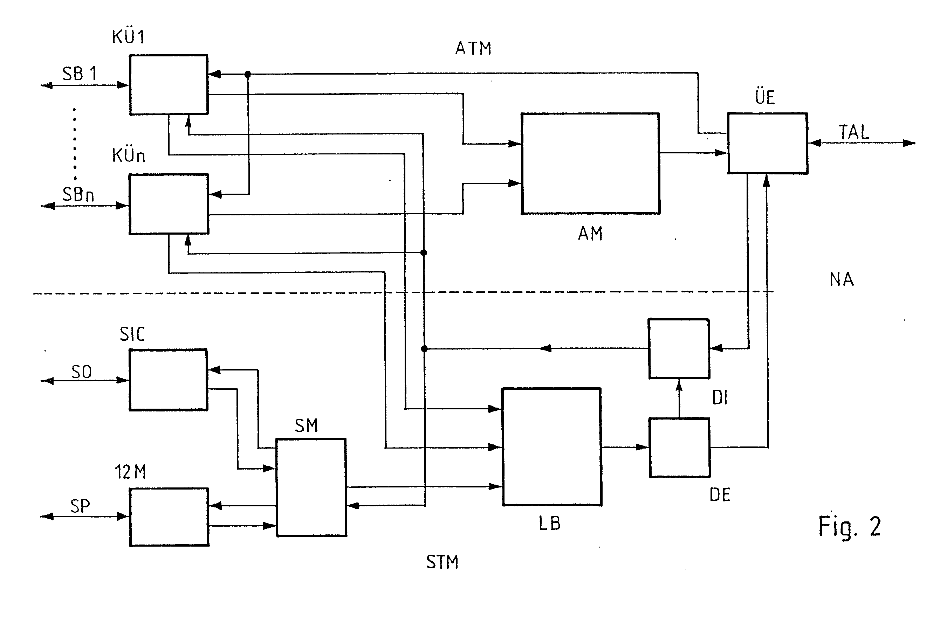

Die von den Anschlußorganen AOA1 - AOAn ausgehenden Teilnehmeranschlußleitungen TAL1 - TALn führen zu besonders ausgestalteten Netzabschlußeinrichtungen NA1 - NAn, welche in Fig. 2 ausführlicher dargestellt sind. Für den Anschluß von Breitbandendgeräten BE1.1 - BEn.m sind gleichartig ausgestattete Breitbandschnittstellen SB vorgesehen. Entsprechend internationalen Standardisierungen von Breitbandschnittstellen kann die übertragene Bitrate 155,52 Mbit/s betragen. Die Breitbandendgeräte BE können innerhalb dieses Breitbandkanals jedoch zusätzlich auch schmalbandige Daten senden und empfangen, so daß eine Kommunikation mit schmalbandigen Endgeräten SE1, bzw. SEn.1 bis SEn.m ebenso möglich ist wie mit Endgeräten IEG1 - IEGn, welche an eine Vermittlungsanlage IVA des Dienste integrierenden Digitalnetzes ISDN angeschlossen sind. Bei einer derartigen Kommunikationsform werden die schmalbandigen Daten durch Verletzung der Codierregel innerhalb des Breitbandkanals übertragen. Die an den Netzabschlußeinrichtungen NA1 - NAn angeschlossenen Schmalbandendgeräte SE1, bzw. SEn .1 - SEn.m sind über Schnittstellen SO, bzw. SOB in gleicher Weise angeschlossen, wie die Endgeräte IEG1 - IEGn, welche an die digitale Vermittlungsanlage IVA angschlossen sind, die zum Dienste integrierenden Digitalnetz ISDN gehört. Bei den Schmalbandendgeräten SE1-SEn.m kann es sich um Endgeräte in gleicher Ausführung handeln, wie sie für das Dienste integrierende Digitalnetz ISDN benutzt werden. Somit ist gewährleistet, daß die für das Dienste integrierende Digitalnetz ISDN vorgesehene Endgeräte auch an Breitbandvermittlungseinrichtungen betrieben werden können.

In der Fig. 2 ist das Blockschaltbild einer Netzabschlußeinrichtung NA beschrieben. Diese besteht aus einem asynchronen Zeitmultiplexteil ATM und einem synchronen Zeitmultiplexteil STM. Die Teilnehmeranschlußleitung TAL endet oder beginnt in einer Übertragungseinrichtung ÜE, wo bei Verwendung einer Glasfaser-Übertragungsstrecke auch eine optisch/elektrische, bzw. elektrisch/optische Umsetzung stattfindet. In dieser Übertragungseinrichtung ÜE werden außerdem die ankommenden Schmalbanddaten erkannt und die abgehenden Schmalbanddaten in den Breitbandkanal eingespeist. Dies erfolgt, wie bereits beschrieben worden ist, durch Erkennen, bzw. Erzeugen einer Codeverletzung des für die Übertragung der Breitbanddaten vorgesehenen genormten Codes beispielsweise CMI.

Die ankommenden Breitbanddaten werden von der Übertragungseinrichtung ÜE auf direktem Wege mehreren Koaxial-Übertragungseinrichtungen KÜ1 - KÜn zugeführt. Daran angeschlossen sind die zu den Endgeräten führenden Schnittstellen SB1 - SBn. Von den Breitbandendgeräten BE kommende Datenströme werden über die Koaxial-Übertragungseinrichtungen KÜ geführt und in einem Asynchron-Multiplexer AM zusammengefaßt. Dort werden Pufferspeicher bereitgestellt, so daß Kollisionen vermieden werden können und in Richtung zur Vermittlung ein gemeinsamer Datenstrom entsteht.

Die synchronen Schmalbandkanäle, welche in den Anschlußorganen AOA1 - AOAn den Breitbandkanälen zugefügt worden sind, werden in den Übertragungseinrichtungen ÜE durch Detektion der Codeverletzungen erfaßt und über eine Einfügeschaltung DI an die bereits beschriebenen Coaxial-Übertragungseinrichtungen KÜ1 - KÜn weitergegeben. Damit sind die Schmalbanddaten auch an den Breitbandschnittstellen SB1 - SBn verfügbar, so daß Breitbandendgeräte BE mit Schmalbandendgeräten, beispielsweise IEG, kommunizieren können. Außerdem werden die Schmalbanddaten einem synchronen Demultiplexer und Multiplexer SM angeboten, an den genormte Schmalband-Schnittstellen angeschlossen sind.

Dabei handelt es sich um integrierte Schaltkreise, welche die Bedingungen genormter Schnittstellen für das Dienste integrierende Digitalnetz ISDN erfüllen. Für die sog. SO-Schnittstelle ist ein Schaltkreis SIC vorgesehen, worin die für diese Schnittstelle geltenden Richtlinien realisiert werden, so daß ein ISDN-Kanal (B + B + D) übertragen werden kann. Außerdem können andersartige Schaltkreise I2M vorgesehen sein, worüber mehrere ISDN-Kanäle beispielsweise mit einer Bitrate von 2,048 Mbit/s übertragen werden können. Es entsteht dabei eine Schnittstelle SP welche ebenfalls die für das ISDN bestehenden Normen erfüllt, woran mehrere Endgeräte oder Vermittlungsanlagen des Dienste integrierenden Netzes ISDN angeschlossen werden können.

Die von den Schmalbandendgeräten SE1 - SEn.m kommenden Schmalbanddaten werden im synchronen Demultiplexer/Multiplexer SM zusammengefaßt und an einen logischen Bus LB weitergegeben. Diesem logischen Bus LB werden außerdem die von den Koaxial-Übertragungseinrichtungen KÜ kommenden und dort durch Erkennen der Codeverletzung ausgekoppelten Schmalbanddaten zugeführt. Der Ausgang des logischen Bus LB ist mit einer D-Kanal-Erkennungsschaltung DE verbunden. Von dort aus gelangen die Schmalbanddaten zur Übertragungseinrichtung ÜE, wo sie durch Erzeugen von Codeverletzungen dem Breitbanddatenkanal zugeführt werden, um zur Teilnehmeranschlußleitung TAL zu gelangen. Der kollisionsfreie Zugriff eines Endgerätes auf einen D-Kanal erfolgt durch Senden eines D-Echokanals, der durch Überlagerung aller von den Endgeräten kommenden D-Kanäle gebildet wird. Dieser D-Echokanal wird in der D-Kanal-Erkennerschaltung gebildet und in der Einfügeschaltung DI in den Bitstrom zu den Endgeräten eingefügt. Von dort aus gelangt dieser D-Echokanal sowohl zu den über Breitbandschnittstellen SB angeschlossenen Breitbandendgeräten BE als auch zu über die Schnittstellen SO bzw. SOB sowie SP angeschlossenen Schmalbandendgeräten SE oder ggf. Vermittlungsanlagen, welche an die Netzabschlußeinrichtung NA angeschlossen sind.

Bei einem derartigen Verfahren ist gewährleistet, daß vom Dienste integrierenden Digitalnetz ISDN stammende Strukturen und Einrichtungen aller Art unverändert beibehalten werden können, wenn ein zukünftiges Breitband-Kommunikationsnetz auf Basis des asynchronen Zeitmultiplex eingeführt wird. Durch die Berücksichtigung der Zuführung von Schmalbanddaten zu Breitbandendgeräten ist außerdem gewährleistet, daß eine Kommunikation zwischen Endgeräten des Breitband-Kommunikationsnetzes und des Dienste integrierenden Digitalnetzes ISDN doppelt gerichtet stattfinden kann.

## Ansprüche

1. Verfahren zur übertragungstechnischen Integration von ISDN-Kanälen mit einem breitbandigen asynchronen Zeitmultiplex-Kanal für digitale Kommunikations-Vermittlungsanlagen und daran angeschlossenen digital betriebenen Kommunikationsendgeräte, wobei zum Erreichen von Gleichstromfreiheit und Taktgehalt ein genormter redundanter Leitungscode verwendet wird,
dadurch gekennzeichnet,
daß jeweils ein Anschlußorgan (AOA1 - AOAn) einer im asynchronen Zeitmultiplex arbeitenden ATM-Vermittlungsanlage (AVA) mit einem zugeordneten Anschlußorgan (AOI1 - AOIn) einer ISDN-Vermittlungsanlage (IVA) verbunden ist, wobei in den ATM-Anschlußorganen (AOA1 - AOAn) durch Codeverletzung ein Kanalmultiplex aus ISN-Kanälen, z.B. 4H1 + 2B + D16, den ATM-Daten zugeführtwird,
daß von den ATM-Anschlußorganen (AOA1 - AOAn) ATM- und ISDN-Kanäle zusammen über Teilnehmeranschlußleitungen (TAL1 - TALn) an besonderes ausgebildete Netzabschlußeinrichtungen (NA1 - NAn) gesendet werden, die zum einen durch Codeverletzungsdetektion einen direkten Zugriff auf die ISDN-Kanäle durch Schmalbandendgeräte (SE) über normierte Schnittstellen, z.B. So für den Basiszugriff (SO) und G.703/6 für 2Mbit/s-Kanäle (SP) erlauben, zum anderen mehrfach die genormte Breitbandschnittstelle (SB) zum Anschluß von Breitband-Endgeräten (BE1.1 - BEn,m) zur Verfügung stellen, wobei auch diesen Endgeräten durch Verletzung des für die SB-Schnittstelle genormten Leitungscodes, z.B. CMI, die ISDN-Kanäle angeboten werden,
daß in umgekehrter Richtung in den Netzabschlußeinrichtungen (NA1 - NAn) die von den Breitband-Endgeräten (BE) kommenden ATM-Kanäle in einem ATM-Mulitplexer (AM) durch Pufferung und Realisierung einer Zugriffsstrategie zu einem einzigen ATM-Kanal zusammengefügt werden,
daß die Zeitmultiplexrahmen der durch Codeverletzung von den Breitband-Endgeräten (BE) sowie der über die genormten ISDN-Schnittstellen zur Netzabschlußeinrichtung (NA) übertragenen ISDN-Kanäle in einem logischen Bus (LB) durch Laufzeitausgleich zeitlich in Übereinstimmung gebracht werden, was einer anschließenden Überlagerung all dieser Multiplexrahmen ähnlich dem Verfahren auf einer busfähigen SO-Schnittstelle erlaubt, wobei für den geregelten Zugriff auf einen Signalisierungskanal der durch Überlagerung entstandene D-Kanal in einer D-Kanal-Erkennerschaltung (DE) aus dem Bitstrom in Richung Vermittlung entnommen wird, und als D-Echokanal in der Einfügeeinrichtung (DI) in den Schmalbandbitstrom zu allen Endgeräten (BE und SE) eingefügt wird,
daß in einer Netzabschlußeinrichtung (NA) die ISDN-Kanäle wiederum durch Codeverletzung in einer optischen oder elektrischen Übertragungseinrichtung (ÜE) den zusammengefügten ATM-Kanäle überlagert und gemeinsam zu dem zugehörigen Breitbandanschlußorgan (AOA1 - AOAn) der ATM-Vermittlungsanlage (AVA) übertragen werden,
und daß die in den ATM-Anschlußorganen (AOA1 - AOAn) ankommenden Datenströme durch Erkennung von Codeverletzungen in einen ATM-Kanal und ISDN-Kanäle getrennt und den jeweils zuständigen Vermittlungseinrichtungen (AVA bzw. AVI) zugeleitet werden.

2. Verfahren nach Anspruch 1,
dadurch gekennzeichnet,
daß für die Übertragung zwischen ATM-Anschlußorganen (AOA) und Netzabschlußeinrichtungen (NA) eine Glasfaser verwendet wird.

3. Verfahren nach Anspruch 1,
dadurch gekennzeichnet,
daß bei der Verwendung von nur einem ATM-Endgerät, das einem Anschlußorgan (AOA) zugeordnet wird, die Netzabschlußeinrichtung (NA) zu einem einfachen Medienumsetzer zwischen Glasfaser und Koaxialkabel wird.

Fig. 1

EP 0 434 972 A2

Fig. 2